# EUROPÄISCHE PATENTSCHRIFT

(11) **EP 2 487 320 B1**
(45) Veröffentlichungstag und Bekanntmachung des Hinweises auf die Patenterteilung: **09.10.2013**
(21) Anmeldenummer: 11001142.6
(22) Anmeldetag: 11.02.2011
(51) Int. Cl.: E21B 7/00, E02D 5/36

(54) **Schneckenbohrer**
Gimlet
Tarière

(43) Veröffentlichungstag der Anmeldung: 15.08.2012
(73) Patentinhaber: BAUER Maschinen GmbH, 86529 Schrobenhausen (DE)
(72) Erfinder: Stimpfle-Ziegler, Andreas, 86551 Aichach (DE)
(74) Vertreter: Wunderlich, Rainer

(56) Entgegenhaltungen:
- EP-A1- 2 246 478
- DE-A1-102006 022 613
- FR-A- 1 436 049
- US-A- 137 744
- US-A- 2 320 612
- US-A- 3 092 190
- US-A1- 2009 294 181
- US-B1- 7 946 355

## Beschreibung

Die Erfindung betrifft einen Schneckenbohrer nach dem Oberbegriff des Anspruchs 1.

Der Schneckenbohrer weist eine Schneideinrichtung zum Abtragen von Bodenmaterial und eine Förderwendel zum Fördern des von der Schneideinrichtung abgetragenen Bodenmaterials auf. Die Förderwendel umfasst mehrere Förderwendelstücke, die entlang einer Axialrichtung des Schneckenbohrers angeordnet und lösbar miteinander verbunden sind.

Ein gattungsgemäßer Bohrer geht aus der US 137 744 A hervor.

Aus der US 2 320 612 A ist bekannt, benachbarte Wendelbleche brückenartig mit einer Verschraubungsplatte zu verbinden. Eine derartige Schraubverbindung kann den Materialfluss auf den Förderwendeln beeinträchtigen und ist zudem einem erheblichen Verschleiß ausgesetzt.

Ein segmentartig mit mehreren Wendelstücken aufgebauter Schneckenbohrer ist beispielsweise auch aus der DE 295 06 880 U1 bekannt.

Ein weiterer aus mehreren Segmenten zusammengesetzter Schneckenbohrer ist in der DE 10 2006 022 613 A1 beschrieben.

Bei den bekannten segmentartig zusammengesetzten Schneckenbohrern handelt es sich um sogenannte Endlosschnecken. Hierbei verläuft eine durchgehende Förderwendel im Wesentlichen entlang der gesamten Länge des Bohrgestänges vom Bohrantrieb bis zur Bohrspitze. Zum Erstellen einer Bohrung wird der Schneckenbohrer bis zur gewünschten Tiefe in den Boden eingedreht, wobei Bodenmaterial nach oben gefördert wird. Beim Zurückziehen des Bohrers kann zur Herstellung eines Bohrpfahls Beton in den entstehenden Hohlraum gepumpt werden.

Die segmentartig zusammengesetzten Endlosschnecken ermöglichen die Erstellung von Bohrungen mit Bohrtiefen, die größer sind als die Länge eines Mastes, entlang welchem die Endlosschnecke verfahren wird. Die einzelnen Förderwendelstücke der Endlosschnecke können hierzu während der Durchführung einer Bohrung sukzessive aneinandergekoppelt werden, um so eine aus mehreren Einzelschnecken zusammengesetzte Endlosschnecke zu erhalten, dessen Länge der Tiefe der gewünschten Bohrung entspricht.

Die segmentartig zusammengesetzten Endlosschnecken ermöglichen zudem eine verbesserte Transportierbarkeit, da die Länge der einzelnen Förderwendelstücke geringer ist als die Gesamtlänge des zusammengesetzten Schneckenbohrers.

Der Erfindung liegt die **Aufgabe** zugrunde, einen Schneckenbohrer anzugeben, welcher, auch bei großen Durchmessern, gut transportierbar und montierbar ist und gleichwohl einen zuverlässigen Betrieb erlaubt..

Die Aufgabe wird erfindungsgemäß durch einen Schneckenbohrer mit den Merkmalen des Anspruchs 1 gelöst. Bevorzugte Ausführungsformen sind in den abhängigen Ansprüchen sowie in der nachfolgenden Beschreibung und den Figuren angegeben.

Bei dem Schneckenbohrer ist erfindungsgemäß, dass eine zentrale Aufnahmewelle vorgesehen ist, an welcher die Schneideinrichtung drehfest angeordnet ist, dass die Förderwendelstücke der Förderwendel jeweils ein Aufsatzrohr aufweisen, welches auf die zentrale Aufnahmewelle aufgesetzt ist, wobei die Aufnahmewelle durch das Aufsatzrohr hindurchragt, und dass die Förderwendelstücke drehfest mit der zentralen Aufnahmewelle verbunden sind.

Grundsätzlich kann es sich bei dem erfindungsgemäßen Schneckenbohrer um eine sogenannte Endlosschnecke, wie vorstehend beschrieben, handeln. In einer bevorzugten Ausgestaltung der Erfindung handelt es sich jedoch um einen Schneckenbohrer für einen intermittierenden Bohrbetrieb. Ein solcher, auch als kurzer Schneckenbohrer zu bezeichnender Schneckenbohrer wird zum Erstellen einer Bohrung mit einem Gestängeelement, insbesondere einer Kellystange, verbunden und bildet so ein Bohrelement. Der Schneckenbohrer wird mit Vorschubkraft in den Boden eingedreht und nach einem bestimmten Bohrfortschritt zusammen mit der Füllung der Förderwendel aus dem Bohrloch gezogen und neben dem Bohrloch entleert. Dieser Vorgang wird bis zum Erreichen der Endtiefe des Bohrlochs mehrfach wiederholt. Das Gestängeelement ohne Förderwendel weist dabei üblicherweise eine Länge auf, die ein Vielfaches der Länge des Schneckenbohrers entspricht.

Ein Grundgedanke der Erfindung besteht darin, einen Schneckenbohrer bereitzustellen, welcher auch bei einem großen Durchmesser, beispielsweise von mehr als 2,50 m, gut auf der Straße transportiert werden kann. Der Schneckenbohrer, insbesondere die Förderwendel, ist hierzu erfindungsgemäß zerlegbar.

Der Erfindung liegt die Erkenntnis zugrunde, dass bei Bohrdurchmessern von beispielsweise mehr als 2,50 m nicht die Länge des Schneckenbohrers, sondern dessen Durchmesser der für den Transport limitierende Faktor ist. Zum Transportieren des Schneckenbohrers ist daher vorgesehen, dass die Förderwendel in vergleichsweise kurze Förderwendelstücke zerlegbar ist. So können die Förderwendelstücke bei einem Transport quer auf dem Transportfahrzeug angeordnet werden.

Aufgrund der zentralen Aufnahmewelle, welche durch die Förderwendelstücke, vorzugsweise alle Förderwendelstücke, zumindest teilweise hindurchragt, wird trotz der Zerlegbarkeit eine hohe Stabilität des Schneckenbohrers erreicht. Die Aufnahmewelle ist entsprechend vorzugsweise zum Halten und Stützen der Förderwendelstücke ausgelegt.

Erfindungsgemäß sind die Förderwendelstücke lösbar miteinander verbunden, so dass sie einzeln transportierbar sind. Weiterhin sind die Förderwendelstücke auch lösbar mit der Aufnahmewelle verbunden, so dass sie getrennt von der Aufnahmewelle transportiert werden können. In einer bevorzugten Ausführungsform sind die Förderwendelstücke und die zentrale Aufnahmewelle so gestaltet, dass die Förderwendelstücke auf die Aufnahmewelle aufschiebbar oder aufsteckbar sind.

Unter einer lösbaren Verbindung wird insbesondere eine solche Verbindung verstanden, die mit Werkzeugen oder per Hand gelöst und, insbesondere durch eine Umkehrung des Lösungsvorgangs, erneut wieder hergestellt werden kann. Eine lösbare Verbindung kann beispielsweise eine Schraubverbindung sein.

Die Schneideinrichtung ist erfindungsgemäß drehfest mit der Aufnahmewelle verbunden. Weiterhin sind auch die Förderwendelstücke so angeordnet, dass sie sich zusammen mit der Aufnahmewelle drehen. Unter einer drehfesten Verbindung wird im Rahmen der vorliegenden Anmeldung insbesondere eine Verbindung verstanden, bei der die verbundenen Elemente relativ zueinander nicht drehbar sind. Eine drehfeste Verbindung erlaubt die Übertragung einer Drehbewegung oder eines Drehmomentes von einem Element auf das andere.

Erfindungsgemäß sind also Aufnahmewelle, Schneideinrichtung und Förderwendelstücke relativ zueinander nicht drehbar beziehungsweise alle diese Elemente drehen sich gemeinsam. Dabei ist es jedoch nicht zwingend erforderlich, dass jedes einzelne Förderwendelstück direkt drehfest an der Aufnahmewelle befestigt ist. Vielmehr kann ein Förderwendelstück auch indirekt, beispielsweise über ein benachbartes Förderwendelstück oder die Schneideinrichtung, drehfest mit der Aufnahmewelle gekoppelt sein. Es kann daher im Sinne einer einfachen Konstruktion vorgesehen sein, dass die zentrale Aufnahmewelle und mindestens eines der Aufsatzrohre der Förderwendelstücke eine Zylinderform aufweisen.

Zum Antreiben des Schneckenbohrers ist in einer bevorzugten Ausgestaltung der Erfindung vorgesehen, dass die Aufnahmewelle an einem der Schneideinrichtung gegenüberliegenden axialen Ende einen Anschlussbereich aufweist, über welchen die Aufnahmewelle drehend antreibbar ist.

Der Schneckenbohrer umfasst demnach ein erstes axiales Ende, an welchem ein Antriebselement, beispielsweise eine Kellystange oder auch direkt ein Bohrantrieb, befestigt werden kann, und ein dem ersten axialen Ende gegenüberliegendes zweites axiales Ende, in dessen Bereich die Schneideinrichtung angeordnet ist. Vor dem Hintergrund des üblicherweise nach unten gerichteten Bohrfortschritts kann das erste axiale Ende auch als oberes Ende und das zweite axiale Ende als unteres Ende des Schneckenbohrers bezeichnet werden.

Zusätzlich zu der Drehbewegung kann auch eine axiale Kraft über den Anschlussbereich auf die zentrale Aufnahmewelle übertragen werden. Der Anschlussbereich kann zur Kraftübertragung Formschlusselemente, beispielsweise Mitnehmerelemente, Ausnehmungen für eine Bolzenverbindung oder andere Mittel zur form- und/oder kraftschlüssigen Verbindung mit dem Antriebselement aufweisen.

Um eine hohe Stabilität des Schneckenbohrers, insbesondere auch bei einer größeren Anzahl an Förderwendelstücken, bereitzustellen, entspricht die Länge der zentralen Aufnahmewelle vorzugsweise im Wesentlichen der Länge des gesamten Schneckenbohrers. Die Aufnahmewelle erstreckt sich demnach vorzugsweise zumindest annähernd entlang der Gesamtlänge des Schneckenbohrers beziehungsweise der segmentartigen Förderwendel und ragt in jedes Förderwendelstück zumindest teilweise hinein oder durch dieses hindurch.

Die Aufnahmewelle dient neben der Bereitstellung der erforderlichen Stabilität vorzugsweise auch der Übertragung von Kräften und Momenten von einem Antriebselement auf die Schneideinrichtung. Insbesondere ist es bevorzugt, dass das zur Bodenlösung erforderliche Drehmoment und die erforderliche Axialkraft zumindest in wesentlichen Teilen über die zentrale Aufnahmewelle auf die Schneideinrichtung übertragbar sind. Grundsätzlich kann der Schneckenbohrer dabei so gestaltet sein, dass das Drehmoment ausschließlich über die zentrale Aufnahmewelle, also nicht über die einzelnen Förderwendelstücke, von dem oberen Ende des Schneckenbohrers auf die Schneideinrichtung übertragbar ist. Vorzugsweise kann jedoch auch ein Teil des Drehmoments über die einzelnen Förderwendelstücke in die Schneideinrichtung eingeleitet werden.

Grundsätzlich ist vorgesehen, dass die zentrale Aufnahmewelle einteilig ausgebildet ist, um eine maximale Stabilität des Schneckenbohrers zu gewährleisten. Insbesondere bei einer Überschreitung einer bestimmten Länge des Schneckenbohrers kann es jedoch auch vorteilhaft sein, die zentrale Aufnahmewelle segmentartig aufzubauen, wobei die Anzahl der Segmente der Aufnahmewelle vorzugsweise geringer ist als die Anzahl der Förderwendelstücke. Dementsprechend ist Länge der einzelnen Wellensegmente vorzugsweise größer als die axiale Länge der einzelnen Förderwendelstücke.

Weiterhin ist erfindungsgemäß vorgesehen, dass die Förderwendelstücke der Förderwendel Wendelbleche aufweisen, welche an einem Außenumfang der Aufsatzrohre angeordnet sind. Die Wendelbleche stellen jeweils ein Segment einer Förderhelix oder Förderspirale dar, die sich durchgehend entlang des Schneckenbohrers erstreckt. Bei zusammengesetztem Schneckenbohrer bilden die einzelnen Wendelbleche insgesamt eine Förderhelix oder Förderspirale. Vorzugsweise sind die Wendelbleche an die Aufsatzrohre angeschweißt oder auf andere Weise fest und unlösbar mit dieser verbunden.

Für eine besonders gute Transportierbarkeit der Förderwendelstücke ist es bevorzugt, dass die Wendelbleche der Förderwendelstücke jeweils nur eine geringe Anzahl an Windungen aufweisen, wobei unter einer Windung ein Wendelabschnitt von 360° zu verstehen ist. Gemäß einer bevorzugten Ausführungsform weisen die Wendelbleche maximal zwei Windungen auf. Besonders bevorzugt ist es, dass die Wendelbleche weniger als eine Windung, insbesondere genau eine halbe Windung aufweisen.

Eine vorteilhafte Verbindung der einzelnen Förderwendelstücke untereinander kann dadurch erzielt werden, dass an den Wendelblechen Verbindungseinrichtungen zum lösbaren Verbinden der Förderwendelstücke mit benachbarten Förderwendelstücken angeordnet sind. Jedes Förderwendelstück umfasst somit mindestens eine Verbindungseinrichtung, mit welcher das Förderwendelstück mit einem benachbarten, darüber oder darunterliegenden, Förderwendelstück fest aber lösbar verbunden werden kann. Die Förderwendelstücke können mittels der Verbindungseinrichtungen insbesondere drehfest miteinander verbunden werden. Die Verbindungseinrichtungen sind also vorzugsweise so ausgeführt, dass eine Drehbewegung von einem Förderwendelstück auf ein benachbartes Förderwendelstück übertragen werden kann.

Es ist bevorzugt, dass die Verbindungseinrichtungen sich entlang radialer Kanten der Wendelbleche erstrecken. Die Anordnung der Verbindungseinrichtungen an den radialen Kanten der Wendelbleche kann konstruktiv einfacher und günstiger sein als Verbindungseinrichtungen an den Aufsatzrohren der Förderwendelstücke.

Eine besonders konstruktiv einfache und gleichwohl wirksame Verbindungseinrichtung ist dadurch gegeben, dass an den radialen Kanten der Wendelbleche jeweils Anschläge gebildet sind, die mit einem entsprechenden Anschlag eines benachbarten Wendelblechs verbindbar sind. Die Anschläge können beispielsweise durch Anschlagplatten gebildet sein. Zusätzlich ist es bevorzugt, dass die Wendelbleche fest, jedoch lösbar miteinander verbunden werden. Unter einer festen Verbindung wird hierbei insbesondere eine solche Verbindung verstanden, die keine oder zumindest keine relevante Relativbewegung der verbundenen Elemente erlaubt.

Erfindungsgemäß ist es bevorzugt, dass die Schneideinrichtung im Bereich des Förderwendeleinlaufs mindestens eine Schneidkante aufweist. Diese erstreckt sich vorzugsweise ausgehend von der zentralen Aufnahmewelle im Wesentlichen über den gesamten Radius der Förderwendel. Mit der Schneideinrichtung beziehungsweise Schneidkante kann Bodenmaterial im Wesentlichen über den gesamten Querschnitt des Schneckenbohrers gelöst werden. Die Förderwendel muss demnach kaum oder keine Schneidarbeiten übernehmen und dient überwiegend oder ausschließlich der Förderung des von der Schneideinrichtung, insbesondere der Schneidkante, gelösten Bodenmaterials. Die auf die Förderwendel wirkenden Kräfte sind somit, insbesondere im Vergleich zu einer bodenverdrängenden Wendel, gering. An der Schneidkante können Bohr- und/oder Schneidwerkzeuge, beispielsweise Zähne, angeordnet sein.

Die Förderwendel ist vorzugsweise so gestaltet, dass eine Förderung des Bodenmaterials entlang einer Axialrichtung des Schneckenbohrers ermöglicht wird. Für eine gute Förderung von Bodenmaterial im Unterschied zu einer mehr radialen Bodenverdrängung ist es bevorzugt, dass der Durchmesser der Aufnahmewelle und/oder der Aufsatzrohre klein ist im Vergleich zum Außendurchmesser der Förderwendel beziehungsweise zum Durchmesser der zu erstellenden Bohrlochs. Vorzugsweise beträgt der Durchmesser der Förderwendel beziehungsweise der Förderwendelstücke ein Vielfaches des Durchmessers der zentralen Aufnahmewelle und/oder der Aufsatzrohre. Damit steht ein möglichst großer Bereich des Querschnitts des Schneckenbohrers für die Bodenförderung zur Verfügung.

Die einzelnen Förderwendelstücke können für eine gute Transportierbarkeit relativ kurz sein und insbesondere eine axiale Länge aufweisen, die geringer ist als eine zulässige Breite eines Transportfahrzeugs zum Transportieren der Förderwendelstücke auf der Straße. Insbesondere bei Förderwendelstücken mit großem Durchmesser ist es bevorzugt, dass die Förderwendelstücke jeweils axiale Längen aufweisen, die geringer sind als ihre Durchmesser.

In einer weiteren bevorzugten Ausgestaltung der Erfindung ist vorgesehen, dass mindestens eines der Förderwendelstücke einen Verbindungsbereich aufweist, welcher mit der Aufnahmewelle, insbesondere dem Anschlussbereich der Aufnahmewelle, drehfest verbunden ist. Demnach kann eine Drehbewegung, insbesondere unmittelbar, von einem obersten Förderwendelstück auf die zentrale Aufnahmewelle übertragen werden. Die drehfeste Verbindung bewirkt also, dass sich das Förderwendelstück und die Aufnahmewelle stets zusammen und mit gleicher Geschwindigkeit drehen.

Eine weitere bevorzugte Ausführungsform ist dadurch gegeben, dass an einem der Schneideinrichtung gegenüberliegenden Ende des Schneckenbohrers ein Kopplungsbereich vorgesehen ist, welcher zum drehenden Antreiben des Schneckenbohrers mit einem Antriebselement koppelbar ist. Der Kopplungsbereich kann vorzugsweise an der zentralen Aufnahmewelle und/oder an einem der Förderwendelstücke angeordnet sein. Dementsprechend kann das Antriebselement die zentrale Aufnahmewelle und/oder das Förderwendelstück drehend antreiben. Bei dem Antriebselement kann es sich beispielsweise um eine von einem Drehmotor eines Bohrgeräts angetriebene Kellystange handeln.

Sofern der Kopplungsbereich an einem, insbesondere einem obersten, Förderwendelstück vorgesehen ist, ist dieses Förderwendelstück vorzugsweise dreh- und axialfest mit der zentralen Aufnahmewelle verbunden, so dass die Kräfte von dem Antriebselement über das Förderwendelstück in die zentralen Aufnahmewelle eingeleitet werden können.

Eine weitere bevorzugte Ausführungsform des erfindungsgemäßen Schneckenbohrers besteht darin, dass die Aufnahmewelle als Hohlwelle ausgeführt ist. Dies bietet zum einen gewichtsmäßige Vorteile und zum anderen die Möglichkeit, ein Fluid, insbesondere eine aushärtbare Masse, beispielsweise Beton, über die zentrale Aufnahmewelle in das Bohrloch einzuleiten, um beispielsweise ein Gründungselement im Boden zu erstellen.

Für ein achsgenaues Eindrehen des Schneckenbohrers in den Boden ist es bevorzugt, dass an einem unteren Ende der Aufnahmewelle eine Bohrspitze angeordnet ist, die der Schneideinrichtung beim Bohrbetrieb vorauseilt und die drehfest mit der Aufnahmewelle und der Schneideinrichtung verbunden ist.

Die zentrale Bohrspitze kann auch als Zentrierspitze oder als Pilot bezeichnet werden. Die Bohrspitze ist vorzugsweise fest, insbesondere drehfest, jedoch lösbar an der zentralen Aufnahmewelle angebracht. Zur Aufnahme der Bohrspitze kann an einem unteren Ende der zentralen Aufnahmewelle eine Aufnahmeeinrichtung vorgesehen sein.

Die Erfindung bezieht sich in einem weiteren Aspekt auf ein Verfahren zum Erstellen einer Bohrung im Boden mittels eines Schneckenbohrers, wie vorstehend beschrieben. Bei dem Verfahren wird Bodenmaterial mittels der Schneideinrichtung abgetragen und mittels der Förderwendel gefördert.

Die Erfindung wird nachfolgend anhand der beigefügten Zeichnungen weiter beschrieben. Hierin zeigt:
- Fig. 1: eine Seitenansicht eines Schneckenbohrers in einem demontierten Zustand;
- Fig. 2: eine Seitenansicht eines Schneckenbohrers im montierten Betriebszustand;
- Fig. 3: eine perspektivische Ansicht eines demontierten Schneckenbohrers von schräg unten;
- Fig. 4: eine perspektivische Ansicht eines demontierten Schneckenbohrers von schräg oben;
- Fig. 5: eine perspektivische Ansicht einer die Schneideinrichtung und die zentrale Aufnahmewelle umfassenden Basiseinheit eines Schneckenbohrers;
- Fig. 6: eine Ansicht von unten auf die Basiseinheit aus Fig. 5;
- Fig. 7: eine Seitenansicht der Basisansicht aus Fig. 5;
- Fig. 8: eine Ansicht von oben auf ein Förderwendelstück eines Schneckenbohrers;
- Fig. 9: eine Seitenansicht des Förderwendelstücks aus Fig. 8;
- Fig. 10: eine Seitenansicht einer ein oberes Förderwendelstück und einen Anschlusskopf umfassenden Abschlusseinheit; und
- Fig. 11: eine perspektivische Ansicht der Abschlusseinheit aus Fig. 8.

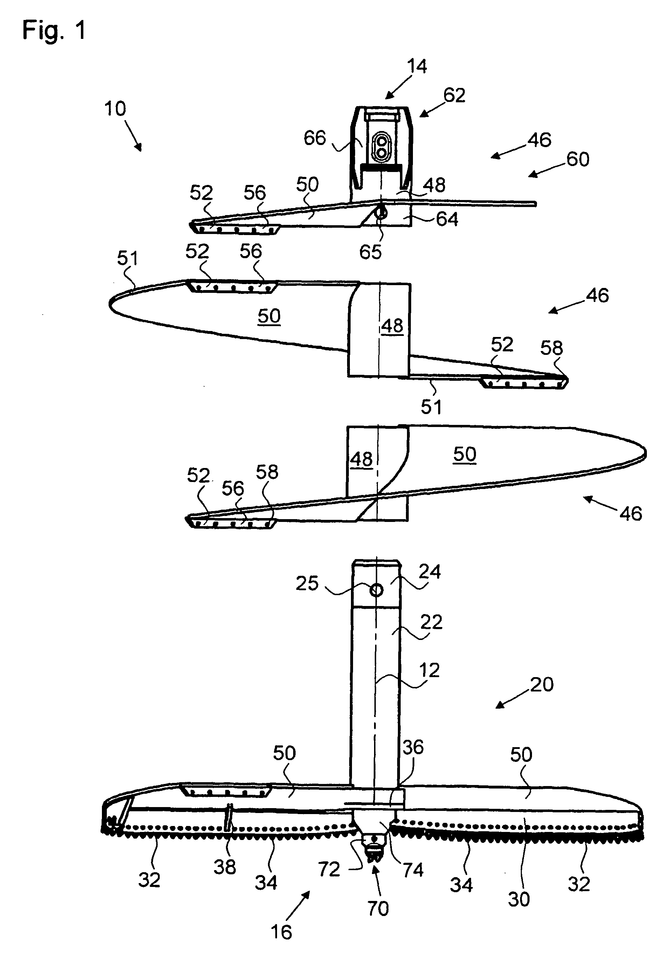

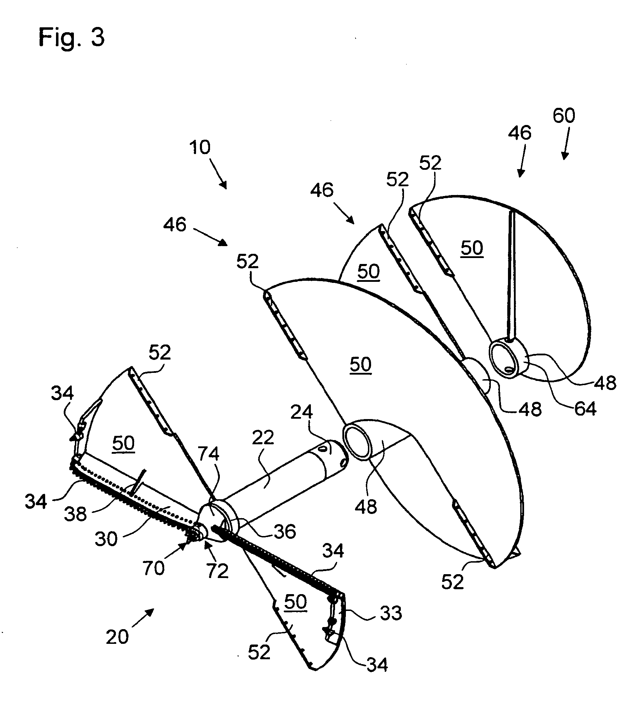

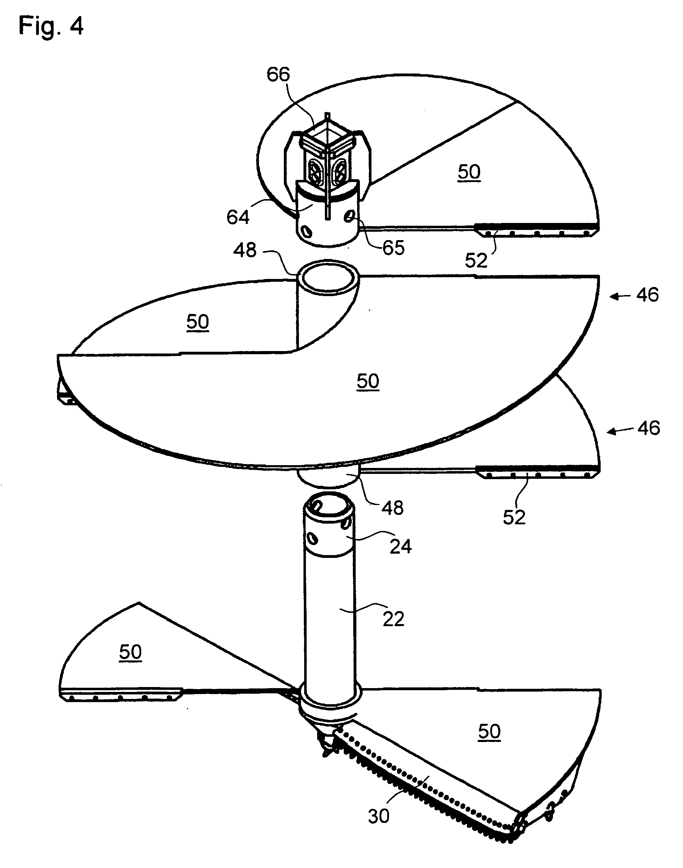

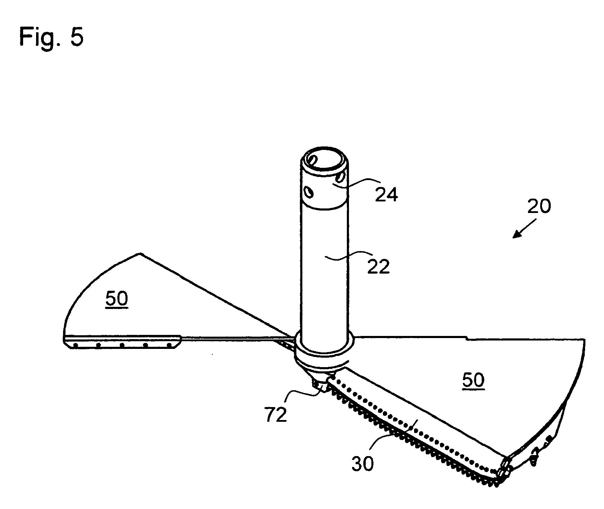

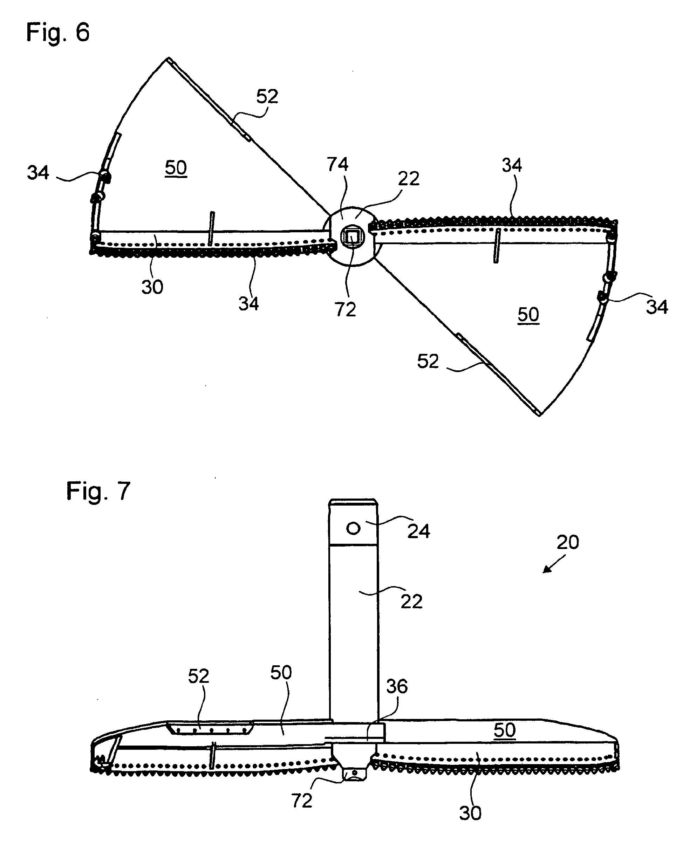

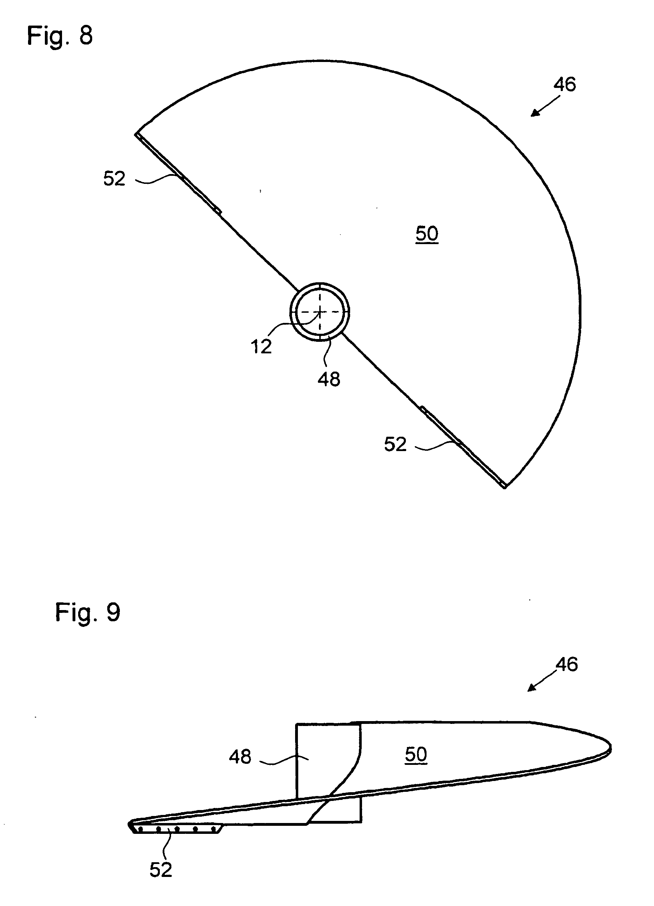

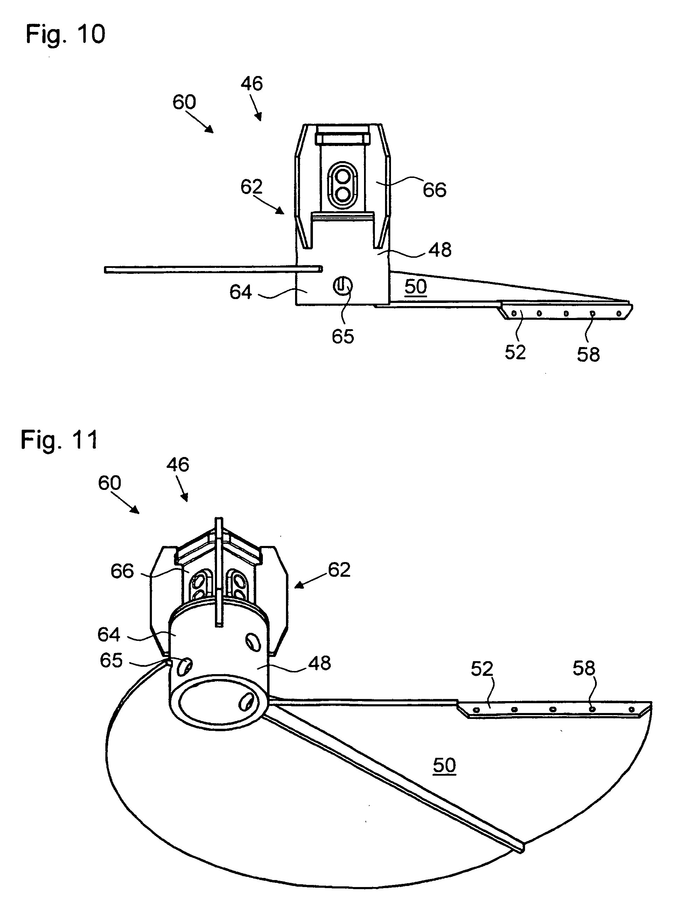

Ein Ausführungsbeispiel eines erfindungsgemäßen Schneckenbohrers 10 wird nachfolgend mit Bezug auf die Figuren 1 bis 11 beschrieben. Äquivalente Komponenten sind in allen Figuren mit denselben Bezugszeichen gekennzeichnet.

Der Schneckenbohrer 10 umfasst eine Längsachse 12, welche eine Rotationsachse des Schneckenbohrers darstellt. Der Schneckenbohrer 10 weist ein erstes axiales Ende 14 auf, das zum drehenden Antreiben des Schneckenbohrers 10 mit einem Antriebselement, beispielsweise einer Antriebswelle eines Drehmotors oder einem Bohrgestänge, wie beispielsweise einer Kellystange, verbunden werden kann. Der Schneckenbohrer 10 weist ferner ein zweites axiales Ende 16 auf, das dem ersten axialen Ende gegenüberliegt und eine Spitze des Schneckenbohrers 10 bildet. Das erste axiale Ende 14 kann auch als oberes Ende und das zweite axiale Ende 16 als unteres Ende des Schneckenbohrers 10 bezeichnet werden.

Der Schneckenbohrer 10 umfasst ein Basiselement 20 mit einer rohrförmigen, runden zentralen Aufnahmewelle 22, die sich in Axialrichtung entlang der Längsachse 12 erstreckt, und einem Anfängerstück 26 mit einer Schneideinrichtung 30. Das Anfängerstück 26 befindet sich an dem bohrlochseitigen Ende der zentralen Aufnahmewelle 22, also an dem unteren Ende des Schneckenbohrers 10. Die zentrale Aufnahmewelle 22 ist als Hohlwelle ausgeführt und kann auch als kraftübertragendes Seelenrohr bezeichnet werden.

Das Anfängerstück 26 mit der Schneideinrichtung 30 ist fest, insbesondere drehfest und axial fest, an der zentralen Aufnahmewelle 22 angebracht. Das Anfängerstück 26 kann beispielsweise an die zentrale Aufnahmewelle 22 angeschweißt oder auf andere Weise unlösbar mit dieser verbunden sein. Alternativ ist es auch möglich, dass das Anfängerstück 26 lösbar an der zentralen Aufnahmewelle 22 befestigt ist.

Neben dem Basiselement 20 umfasst der Schneckenbohrer 10 mehrere, also mindestens zwei, Förderwendelstücke 46, die entlang der Längsachse 12 auf die zentrale Aufnahmewelle 22 von oben aufgeschoben beziehungsweise über die Aufnahmewelle 22 gestülpt werden können. Jedes Förderwendelstück 46 umfasst ein zentrales Aufsatzrohr 48 und ein oder mehrere Wendelbleche 50, die an einem Außenmantel der Aufsatzrohre 48 angeordnet sind. Die Aufsatzrohre 48 sind rohr- oder hülsenförmig gestaltet und liegen flächig an einem Außenmantel der Aufnahmewelle 22 an.

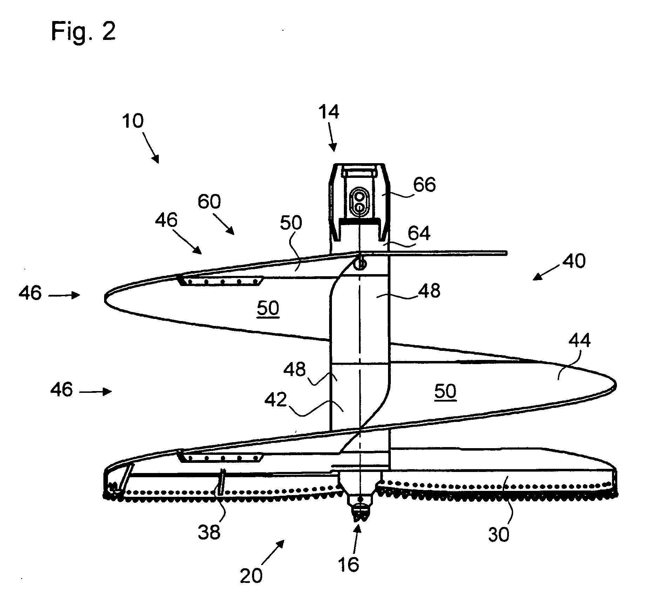

Im montierten Zustand des Schneckenbohrers 10, welcher in Fig. 2 dargestellt ist, bilden die einzelnen Wendelbleche 50 eine durchgehende Förderhelix 44. Entsprechend bilden die Aufsatzrohre 48 ein segmentartig zusammengesetztes Hüllrohr 42 und die Förderwendelstücke 46 insgesamt eine spiralförmige Förderwendel 40. Die einzelnen Förderwendelstücke 46 können als Länge unterschiedliche Ganghöhen abdecken.

Die Förderwendel 40 erstreckt sich entlang der gesamten Länge des Schneckenbohrers 10 beziehungsweise entlang der gesamten Länge der zentralen Aufnahmewelle 22 oder zumindest eines überwiegenden Teils hiervon. Grundsätzlich kann die Aufnahmewelle 22 auch verlängerbar sein.

Die einzelnen Wendelbleche 50 haben die Form eines Helixabschnitts, der sich entlang 180°, also eine halbe Windung oder Umdrehung, um das Aufsatzrohr 48 erstreckt. Alternativ sind jedoch auch beispielsweise Wendelbleche mit 360°, 540° oder 720° möglich.

An den radialen Kanten 51 der Wendelbleche 50 sind Verbindungseinrichtungen 52 zum Verbinden des Wendelblechs 50 mit einem benachbarten Wendelblech 50 vorgesehen. Die Verbindungseinrichtungen 52 umfassen ein Verbindungsblech 56, welches sich entlang der Kante 51 erstreckt und auch als Flansch bezeichnet werden kann. Die Verbindungsbleche 56 sowie gegebenenfalls freibleibende Bereiche der Kanten 51 bilden einen Anschlag für ein benachbartes Wendelblech 50. Die Anschlussflächen der Verbindungsbleche 56 sind hierbei senkrecht zur Umfangsrichtung des Schneckenbohrers 10 ausgerichtet. In den Verbindungsblechen 56 können Durchgänge 58, beispielsweise für eine Verschraubung mit einem benachbarten Verbindungsblech, vorgesehen sein.

Die Schneideinrichtung 30 ist fest mit der zentralen Aufnahmewelle 22 verbunden. Zur Befestigung der Schneideinrichtung 30 beziehungsweise des Anfängerstücks 26 ist an dem Anfängerstück 26 ein ringförmiger Befestigungsbereich 36 vorgesehen, in welchem die zentrale Aufnahmewelle 22 aufgenommen ist. Die Schneideinrichtung 30 umfasst zwei um 180° versetzte Schneidkanten 32, die sich ausgehend von einem inneren Bereich des Schneckenbohrers 10 radial nach außen erstrecken. Die Länge oder radiale Erstreckung einer Schneidkante 32 entspricht in etwa dem Radius der Wendelbleche 50. An den Schneidkanten 32 sind Schneid- und/oder Bohrwerkzeuge 34 angeordnet.

In einem zentralen untersten Bereich des Schneckenbohrers 10 befindet sich eine Bohrspitze 70, die den radialen Schneidkanten 32 in axialer Richtung vorauseilt. Die Bohrspitze 70 ist in einer Aufnahme 72 lösbar beziehungsweise auswechselbar aufgenommen und dient im Wesentlichen der Zentrierung des Schneckenbohrers 10. Die zentrale Aufnahmewelle 22 ist an ihrem unteren Ende durch einen Konusabschnitt 74, an welchem die Aufnahme 72 ausgebildet ist, verschlossen.

An dem mit der zentralen Aufnahmewelle 22 fest verbundenen Anfängerstück 26 ist ein erstes Wendelblech 50 angeordnet und drehfest mit der zentralen Aufnahmewelle 22 verbunden. Das erste oder unterste Wendelblech 50 ist vorzugsweise mit der Schneideinrichtung 30 fest verbunden, beispielsweise verschraubt oder verschweißt. Zum Abstützen des unteren Wendelblechs 50 können eine oder mehrere Stützen 38 vorgesehen sein, die das Wendelblech 50 an der Schneideinrichtung 30 abstützen. Weiterhin umfasst das Anfängerstück 26 einen im Bereich des Außenumfangs des Schneckenbohrers 10 angeordneten Kaliberring 33. An dem Kaliberring 33 sind weitere Schneidwerkzeuge 34, insbesondere Schneidzähne, angebracht.

Da auf die Förderwendelstücke 46, welche im Wesentlichen nur der Förderung von bereits gelöstem Bodenmaterial dienen, nur vergleichsweise geringe Kräfte ausgeübt werden, kann es ausreichend sein, die drehfeste Verbindung der Förderwendelstücke 46 mit dem Anfängerstück 26 ausschließlich über die Wendelbleche 50, insbesondere über die Verbindungseinrichtungen 52, herzustellen. Grundsätzlich ist es daher möglich, dass zumindest eines der Aufsatzrohre 48 der Förderwendelstücke 46 gegenüber der zentralen Aufnahmewelle 22 drehbar ist, wie in den Figuren dargestellt. Alternativ oder zusätzlich hierzu können die einzelnen Aufsatzrohre 48 aber auch drehfest mit der zentralen Aufnahmewelle 22 verbunden sein. Hierzu können entsprechende Mitnehmerelemente an der zentralen Aufnahmewelle 22 und/oder den Aufsatzrohren 48 vorgesehen sein, oder Aufnahmewelle 22 und Aufsatzrohre 48 können beispielsweise als Mehrkant ausgeführt sein.

An einem der Schneideinrichtung 30 gegenüberliegenden Ende des Schneckenbohrers 10 ist ein Abschlussförderwendelstück 60, welches auch als Abschlusseinheit bezeichnet werden kann, als oberstes Förderwendelstück 46 vorgesehen. Das Abschlussförderwendelstück 60 weist, wie auch die weiteren Förderwendelstücke 46, ein Wendelblech 50 auf. Weiterhin umfasst das Abschlussförderwendelstück 60 einen Verbindungsbereich 64, mittels welchem es drehfest mit der zentralen Aufnahmewelle 22 verbunden ist. Die zentrale Aufnahmewelle 22 weist hierzu einen Anschlussbereich 24 auf, der mit dem Verbindungsbereich 64 formschlüssig in Eingriff gebracht werden kann. In der dargestellten Ausführungsform weisen Anschlussbereich 24 und Verbindungsbereich 64 Öffnungen 25 beziehungsweise 65 für Verriegelungsbolzen auf. Anschlussbereich 24 und Verbindungsbereich 64 können alternativ beispielsweise auch als Mehrkant, beispielsweise Vierkant, ausgeführt sein. Der Verbindungsbereich 64 kann insbesondere an einem Aufsatzrohr 48 des Abschlussförderwendelstücks 60 ausgebildet sein.

Zum Verbinden mit einem Antriebselement, wie beispielsweise einem Bohrgestänge oder der Ausgangswelle eines Drehmotors, ist an dem Abschlussförderwendelstück 60 ein Kopplungsbereich 66 vorgesehen, welcher auch als Anschlusskopf bezeichnet werden kann. Über den Kopplungsbereich 66 kann ein Drehmoment in das Abschlussförderwendelstück 60 eingeleitet werden. Das Drehmoment kann über den Verbindungsbereich 64 direkt in einen oberen Abschnitt der zentralen Aufnahmewelle 22 eingeleitet werden. Bei dem Kopplungsbereich 66 kann es sich insbesondere um eine sogenannte Kellybox zum Einführen eines Verbinders einer Kellystange handeln.

Verbindungsbereich 64 und Kopplungsbereich 66 bilden ein Kopfelement 62 des Abschlussförderwendelstücks 60. Das Kopfelement 62 ist auf die Aufnahmestelle 22, insbesondere den Anschlussbereich 24, aufgesetzt und ragt über die Aufnahmewelle 22 in axialer Richtung hervor.

Durch das mit der zentralen Aufnahmewelle 22 drehfest verbundene Abschlussförderwendelstück 60 kann ein eingeleitetes Drehmoment direkt von dem Abschlussförderwendelstück 60 über die zentrale Aufnahmewelle 22 in die Schneideinrichtung 30 eingeleitet werden. Die zwischen Abschlussförderwendelstück 60 und Schneideinrichtung 30 angeordneten Förderwendelstücke 46 müssen daher nicht für die Übertragung des zum Abtragen von Bodenmaterial erforderlichen Drehmoments ausgelegt sein und können entsprechend leichter ausgeführt sein.

Insgesamt wird mit dem erfindungsgemäßen Schneckenbohrer ein besonders stabiles Bohrelement bereitgestellt, welches eine für einen Transport vorteilhafte Zerlegungsmöglichkeit aufweist.

## Patentansprüche

1. Schneckenbohrer (10) mit
- einer Schneideinrichtung (30) zum Abtragen von Bodenmaterial und
- einer Förderwendel (40) zum Fördern des von der Schneideinrichtung (30) abgetragenen Bodenmaterials,
- wobei die Förderwendel (40) mehrere Förderwendelstücke (46) aufweist, die entlang einer Axialrichtung des Schneckenbohrers (10) angeordnet und lösbar miteinander verbunden sind,
wobei
- eine zentrale Aufnahmewelle (22) vorgesehen ist, an welcher die Schneideinrichtung (30) drehfest angeordnet ist,
- die Förderwendelstücke (46) der Förderwendel (40) jeweils ein Aufsatzrohr (48) aufweisen, welches auf die zentrale Aufnahmewelle (22) aufgesetzt ist, wobei die zentrale Aufnahmewelle (22) durch das Aufsatzrohr (48) hindurchragt,
- die Förderwendelstücke (46) drehfest mit der zentralen Aufnahmewelle (22) verbunden sind und
- die Förderwendelstücke (46) der Förderwendel (40) Wendelbleche (50) aufweisen, welche an einem Außenumfang der Aufsatzrohre (48) angeordnet sind,
- die Wendelbleche (50) eine durchgehende Förderhelix (44) bilden, welche sich von der Schneideinrichtung (30) an einem unteren axialen Ende (16) zu einem oberen axialen Ende (14) des Schneckenbohrers (10) erstreckt,
**dadurch gekennzeichnet,**
- **dass** an den Wendelblechen (50) Verbindungseinrichtungen (52) zum lösbaren Verbinden der Förderwendelstücke (46) mit benachbarten Förderwendelstücken (46) angeordnet sind, und
- **dass** zum Bilden der Verbindungseinrichtungen (52) entlang von radialen Kanten (51) der Wendelbleche (50) Verbindungsbleche (56) vorgesehen sind, welche sich senkrecht zur Umfangsrichtung des Schneckenbohrers (10) nach unten erstrecken.

2. Schneckenbohrer nach Anspruch 1,
**dadurch gekennzeichnet,**
**dass** die Aufnahmewelle (22) an einem der Schneideinrichtung (30) gegenüberliegenden axialen Ende einen Anschlussbereich (24) aufweist, über welchen die Aufnahmewelle (22) drehend antreibbar ist.

3. Schneckenbohrer nach Anspruch 1 oder 2,
**dadurch gekennzeichnet,**
**dass** die Länge der Aufnahmewelle (22) annähernd der Länge des gesamten Schneckenbohrers (10) entspricht.

4. Schneckenbohrer nach einem der Ansprüche 1 bis 3,
**dadurch gekennzeichnet,**
**dass** die Wendelbleche (50) jeweils maximal zwei Windungen aufweisen.

5. Schneckenbohrer nach einem der Ansprüche 1 bis 4,
**dadurch gekennzeichnet,**
**dass** die Verbindungsbleche (56) Durchgänge (58) für eine Verschraubung mit benachbarten Verbindungsblechen (56) aufweisen.

6. Schneckenbohrer nach einem der Ansprüche 1 bis 5,
**dadurch gekennzeichnet,**
**dass** die Schneideinrichtung (30) im Bereich des Förderwendeleinlaufs mindestens eine Schneidkante (32) aufweist.

7. Schneckenbohrer nach einem der Ansprüche 1 bis 6,
**dadurch gekennzeichnet,**
**dass** der Durchmesser der Förderwendel (40) beziehungsweise der Förderwendelstücke (46) ein Vielfaches des Durchmessers der Aufnahmewelle (22) und/oder der Aufsatzrohre (48) beträgt.

8. Schneckenbohrer nach einem der Ansprüche 1 bis 7,
**dadurch gekennzeichnet,**
**dass** die Förderwendelstücke (46) jeweils axiale Längen aufweisen, die geringer sind als ihre Durchmesser.

9. Schneckenbohrer nach einem der Ansprüche 2 bis 8,
**dadurch gekennzeichnet,**
**dass** mindestens eines der Förderwendelstücke (46) einen Verbindungsbereich (64) aufweist, welcher mit der Aufnahmewelle (22), insbesondere dem Anschlussbereich (24), drehfest verbunden ist.

10. Schneckenbohrer nach einem der Ansprüche 1 bis 9,
**dadurch gekennzeichnet,**
**dass** an einem der Schneideinrichtung (30) gegenüberliegenden Ende des Schneckenbohrers (10) ein Kopplungsbereich (66) vorgesehen ist, welcher zum drehenden Antreiben des Schneckenbohrers (10) mit einem Antriebselement koppelbar ist.

11. Schneckenbohrer nach einem der Ansprüche 1 bis 10,
**dadurch gekennzeichnet,**
**dass** die Aufnahmewelle (22) als Hohlwelle ausgeführt ist.

12. Schneckenbohrer nach einem der Ansprüche 1 bis 11,
**dadurch gekennzeichnet,**
**dass** an einem unteren Ende der Aufnahmewelle (22) eine Bohrspitze (70) angeordnet ist, die der Schneideinrichtung (30) beim Bohrbetrieb vorauseilt und die drehfest mit der Aufnahmewelle (22) und der Schneideinrichtung (30) verbunden ist.

13. Verfahren zum Erstellen einer Bohrung im Boden mittels eines Schneckenbohrers (10) nach einem der Ansprüche 1 bis 12,
wobei Bodenmaterial mittels der Schneideinrichtung (30) abgetragen und mittels der Förderwendel (40) gefördert wird.

## Claims

1. Auger (10) having
- a cutting means (30) for removing ground material and
- a conveyor flight (40) for conveying the ground material removed by the cutting means (30),
- whereby the conveyor flight (40) has several conveyor flight pieces (46) which are arranged along an axial direction of the auger (10) and connected to each other in a detachable manner,
wherein
- a central receiving shaft (22) is provided, on which the cutting means (30) is arranged in a rotationally fixed manner,
- the conveyor flight pieces (46) of the conveyor flight (40) have a mounting pipe (48) each, which is mounted onto the central receiving shaft (22), whereby the central receiving shaft (22) projects through the mounting pipe (48),
- the conveyor flight pieces (46) are connected in a rotationally fixed manner to the central receiving shaft (22), and
- the conveyor flight pieces (46) of the conveyor flight (40) have flight plates (50), which are arranged at an outer circumference of the mounting pipes (48),
- the flight plates (50) form a continuous conveyor helix (44), which extends from the cutting means (30) at a lower axial end (16) to an upper axial end (14) of the auger (10),
**characterized in that**
- on the flight plates (50) connecting means (52) for detachably connecting the conveyor flight pieces (46) to adjacent conveyor flight pieces (46) are arranged, and
- for forming the connecting means (52) along radial edges (51) of the flight plates (50) connecting plates (56) are provided, which extend downwards and perpendicularly to the circumferential direction of the auger (10).

2. Auger according to claim 1,
**characterized in that**
at an axial end lying opposite the cutting means (30) the receiving shaft (22) has a junction area (24), via which the receiving shaft (22) can be driven in a rotating manner.

3. Auger according to claim 1 or 2,
**characterized in that**
the length of the receiving shaft (22) corresponds approximately to the length of the entire auger (10).

4. Auger according to anyone of the claims 1 to 3,
**characterized in that**
the flight plates (50) each have a maximum of two turns.

5. Auger according to anyone of the claims 1 to 4,
**characterized in that**
the connecting plates (56) have passages (58) for a screw connection with adjacent connecting plates (56).

6. Auger according to any one of claims 1 to 5,
**characterized in that**
the cutting means (30) has at least one cutting edge (32) in the area of the conveyor flight run-in.

7. Auger according to any one of claims 1 to 6,
**characterized in that**
the diameter of the conveyor flight (40) or the conveyor flight pieces (46) is a multiple of the diameter of the receiving shaft (22) and/or the mounting pipes (48).

8. Auger according to any one of claims 1 to 7,
**characterized in that**
the conveyor flight pieces (46) each have axial lengths that are smaller than their diameters.

9. Auger according to any one of claims 2 to 8,
**characterized in that**
at least one of the conveyor flight pieces (46) has a connecting area (64), which is connected in a rotationally fixed manner to the receiving shaft (22), in particular the junction area (24).

10. Auger according to any one of claims 1 to 9,
**characterized in that**
at an end of the auger (10) lying opposite the cutting means (30) a coupling area (66) is provided, which can be coupled to a drive element for driving the auger (10) in a rotating manner.

11. Auger according to any one of claims 1 to 10,
**characterized in that**
the receiving shaft (22) is designed as a hollow shaft.

12. Auger according to any one of claims 1 to 11,
**characterized in that**
at a lower end of the receiving shaft (22) a drill bit (70) is arranged, which precedes the cutting means (30) during drilling operation and is connected in a rotationally fixed manner to the receiving shaft (22) and the cutting means (30).

13. Method for producing a borehole in the ground by means of an auger (10) according to any one of claims 1 to 12,
whereby ground material is removed by means of the cutting means (30) and conveyed by means of the conveyor flight (40).

## Revendications

1. Tarière (10) avec :
- un dispositif de coupe (30) pour l'enlèvement d'un matériau de sol, et
- une hélice de transport (40) pour l'évacuation du matériau de sol enlevé par le dispositif de coupe (30),
- l'hélice de transport (40) comprenant plusieurs tronçons d'hélice de transport (46), qui sont disposés le long d'une direction axiale de la tarière (10) et qui sont couplés entre eux de manière détachable,
dans laquelle :
- un arbre de réception (22) central est prévu, sur lequel le dispositif de coupe (30) est monté en rotation,
- les tronçons d'hélice de transport (46) de l'hélice de transport (40) comprennent chacun un tube (48) qui est monté sur l'arbre de réception (22) central, l'arbre de réception (22) central pénétrant dans le tube (48),
- les tronçons d'hélice de transport (46) sont couplés en rotation à l'arbre de réception (22) central, et
- les tronçons d'hélice de transport (46) de l'hélice de transport (40) comprennent des plaques d'hélice (50) qui sont disposées sur le pourtour du tube (48),
- les plaques d'hélice (50) forment une hélice de transport continue (44), qui s'étend du dispositif de coupe (30), au niveau d'une extrémité inférieure axiale (16), jusqu'à une extrémité axiale supérieure (14) de la tarière (10),
**caractérisée :**
- **en ce que**, contre les plaques d'hélice (50), des dispositifs de couplage (52) sont disposés pour un couplage démontable des tronçons d'hélice de transport (46) avec les tronçons d'hélice de transport (46) voisins, et
- **en ce que**, pour la formation des dispositifs de couplage (52) le long de bordures radiales (51) des plaques d'hélice (50), des plaquettes de couplage (56) sont prévues, qui s'étendent perpendiculairement à la direction circonférentielle de la tarière (10) et vers le bas.

2. Tarière selon la revendication 1,
**caractérisée :**
**en ce que** l'arbre de réception (22) comprend, à une extrémité axiale opposée au dispositif de coupe (30), une zone de raccordement (24) sur laquelle l'arbre de réception (22) peut être entraîné en rotation.

3. Tarière selon la revendication 1 ou 2,
**caractérisée :**
**en ce que** la longueur de l'arbre de réception (22) correspond sensiblement à la longueur de la tarière (10) dans son ensemble.

4. Tarière selon une des revendications 1 à 3,
**caractérisée :**
**en ce que** les plaques d'hélice (50) comprennent chacune au maximum deux spires.

5. Tarière selon une des revendications 1 à 4,
**caractérisée :**
**en ce que** les plaquettes de couplage (56) comprennent des ouvertures (58) pour un assemblage avec les plaquettes de couplage (56) voisines.

6. Tarière selon une des revendications 1 à 5,
**caractérisée :**
**en ce que** le dispositif de coupe (30) comprend au moins un bord de coupe (32) dans la zone du début de l'hélice de transport.

7. Tarière selon une des revendications 1 à 6,
**caractérisée :**
**en ce que** le diamètre de l'hélice de transport (40) ou respectivement des tronçons d'hélice de transport (46) représente un multiple du diamètre de l'arbre de réception (22) et/ou du tube (48).

8. Tarière selon une des revendications 1 à 7,
**caractérisée :**
**en ce que** les tronçons d'hélice de transport (46) comportent, individuellement, des longueurs axiales qui sont plus faibles que leur diamètre.

9. Tarière selon une des revendications 2 à 8,
**caractérisée :**
**en ce qu'**au moins l'un des tronçons d'hélice de transport (46) comprend une zone de raccordement (64) qui est couplée en rotation avec l'arbre de réception (22), plus particulièrement avec la zone de raccordement (24).

10. Tarière selon une des revendications 1 à 9,
**caractérisée :**
**en ce qu'**à une extrémité de la tarière (10) opposée au dispositif de coupe (30), il est prévu une zone de couplage (66) qui, pour l'entraînement en rotation de la tarière (10), peut être couplée à un élément d'entraînement.

11. Tarière selon une des revendications 1 à 10,
**caractérisée :**
**en ce que** l'arbre de réception (22) est réalisé sous la forme d'un arbre creux.

12. Tarière selon une des revendications 1 à 11,
**caractérisée :**
**en ce qu'**à une extrémité inférieure de l'arbre de réception (22), il est prévu une pointe de forage (70) qui est en avant du dispositif de coupe (30) lors de l'opération de forage et qui est couplée en rotation avec l'arbre de réception (22) et avec le dispositif de coupe (30).

13. Procédé pour la réalisation d'un orifice dans le sol au moyen d'une tarière (10) selon une des revendications 1 à 12,
dans lequel le matériau du sol est enlevé au moyen du dispositif de coupe (30) et transporté au moyen de l'hélice de transport (40).
